Europäisches Patentamt

European Patent Office

Office européen des brevets

(19)

(11) Veröffentlichungsnummer: **0 092 600**
**A1**

# (12) EUROPÄISCHE PATENTANMELDUNG

(21) Anmeldenummer: 82106793.1

(22) Anmeldetag: 27.07.82

(51) Int. Cl.³: **G 01 S 3/04**
G 01 S 11/00, A 63 B 29/02

(30) Priorität: 26.04.82 DE 3215523

(43) Veröffentlichungstag der Anmeldung:
02.11.83 Patentblatt 83/44

(84) Benannte Vertragsstaaten:
AT CH DE FR IT LI

(71) Anmelder: Wilhelm Ruf KG
Schwanthaler Strasse 18
D-8000 München 2(DE)

(72) Erfinder: Pollinger, Hans
Manholdinger Strasse 4
D-8224 Chieming Hart(DE)

(74) Vertreter: von Bülow, Tam Axel Hans-Werner,
Dr. et al,
Patentanwälte Kern, Popp, Sajda und von Bülow
Widenmayerstrasse 48
D-8000 München 22(DE)

(54) Verfahren und Schaltungsanordnung zur Ortung Verschütteter nach dem Sender/Empfänger-Prinzip.

(57) Das Verfahren und die Schaltungsanordnung zur Ortung Verschütteter nach dem Sender-Empfängerprinzip wandelt die Amplitude eines Empfangssignales, die ein Maß für die räumliche Lage bzw. den Abstand zwischen Sender und Empfänger darstellt, nur dann in eine Schwingung im Hörbereich um, wenn die Amplitude des Empfangssignales einen vorbestimmten Wert überschritten hat. Ist dies nicht der Fall, so wird das Empfangssignal direkt verstärkt und ggf. nach einder Demodulation hörbar gemacht. Hierzu ist eine Triggerschaltung (42) vorgesehen, die einen spannungsgesteuerten Oszillator (43) nur dann einschaltet, wenn das Empfangssignal eines oder mehrerer Empfangskanäle (W1, 34, 35; W2, 37, 38, 39, 40) einen vorgegebenen Wert überschritten hat. Die Frequenz des spannungsgesteuerten Oszillators (43) wird durch die Amplitude des Empfangssignales verändert. In einem dem spannungsgesteuerten Oszillator nachgeschalteten elektro-akustischen Wandler (21) wird dieses Signal dann hörbar gemacht. Hat die Triggerschaltung (42) den spannungsgesteuerten Oszillator (43) nicht eingeschaltet, so werden die Empfangssignale eines oder mehrerer Kanäle direkt über einen Verstärker (36) dem Wandler (21) zugeführt. Bei durchgeschalteter Triggerschaltung (42) ist dieser Verstärker (36) dagegen abgeschaltet.

EP 0 092 600 A1

./...

Fig.5

# KERN, POPP, SAJDA, v. BÜLOW & PARTNER

Patentanwälte · European Patent Attorneys
München** · Bremen*

Kern, Popp, Sajda, v. Bülow & Partner, Postfach 86 06 24, D-8000 München 86

Ralf M. Kern · Dipl.-Ing.**
Dr. Eugen Popp · Dipl.-Ing., Dipl.-Wirtsch.-Ing.**
Wolf E. Sajda · Dipl.-Phys.**
Dr. Tam v. Bülow · Dipl.-Ing., Dipl.-Wirtsch.-Ing.**
Erich Bolte · Dipl.-Ing.*

BÜRO MÜNCHEN/MUNICH OFFICE:
Widenmayerstraße 48
Postfach/P.O. Box 86 06 24
D-8000 München 86

Telefon: (089) 22 26 31
Telex: 5 213 222 epo d

0092600

| Ihr Zeichen | Ihr Schreiben vom | Unser Zeichen | Datum |
|---|---|---|---|
| Your ref. | Your letter of | Our ref. | Date |
| | | RUF 1855 | 27. Juli 1982 |

Wilhelm Ruf KG

Schwanthalerstr. 18

8000 München 2

## Verfahren und Schaltungsanordnung zur Ortung Verschütteter nach dem Sender/Empfänger-Prinzip

Die Erfindung bezieht sich auf ein Verfahren zur Ortung Verschütteter nach dem Sender/Empfänger-Prinzip, bei dem die Amplitude eines Empfangssignales, die ein Maß für die räumliche Lage zwischen Sender und Empfänger darstellt, in eine Schwingung im Hörbereich umgewandelt wird, so daß deren Frequenz die räumliche Lage zwischen Sender und Empfänger angibt.

Weiterhin bezieht sich die Erfindung auf eine Schaltungsanordnung zur Ortung Verschütteter nach dem Sender/Empfänger-Prinzip mit einer richtungsselektiven Sende/Empfangs-Antenne, mindestens einem ein/aus-schaltbaren Sendeoszillator und mindestens einem ein/aus-schaltbaren Empfangskanal, der einen Amplituden/Frequenzwandler enthält, dessen Ausgangsfrequenz der Amplitude des Empfangssignales zugeordnet ist und mit einem elektro-akustischen Wandler.

Ein derartiges Verfahren bzw. eine solche Schaltungsanordnung sind aus der DE-OS 27 03 491 bekannt. Das dort beschriebene Verfahren ging seinerseits von einem Verfahren aus, bei dem das Empfangssignal direkt verstärkt wurde und in einen Kopfhörer angezeigt wurde. Hierbei war dann die Lautstärke des im Kopfhörer angezeigten Signales ein Maß für den Abstand bzw. die räumliche Lage zwischen Sender und Empfänger. Da das menschliche Ohr wegen seiner logarithmischen Kennlinie ein verhältnismäßig schlechtes Auflösungsvermögen für Lautstärkeänderungen hat wurde in der DE-OS 27 03 491 vorgeschlagen, die Amplitude des Empfangssignales in ein Signal im Hörbereich umzuwandeln, dessen Frequenz ein Maß für die Amplitude des Empfangssignales ist. Der Vorteil liegt darin, daß das menschliche Ohr ein hervorragendes Auflösungsvermögen für Tonhöhenschwankungen, d.h. für Frequenzänderungen hat, wodurch eine Suche des mit einem Sender ausgerüsteten Verschütteten erheblich verbessert wird.

Diese Schaltungsanordnung hat jedoch den Nachteil, daß der Amplituden-Frequenzwandler, der allgemein ein Spannungs/ Frequenzwandler (im folgenden VCO genannt) sein kann, erst dann erfaßbare Frequenz- und damit Tonhöhenänderungen produziert, wenn ein gewisser Spannungshub seiner Eingangsspannung vorliegt. Mit anderen Worten muß die Feldstärke des Empfangssignales eine vorbestimmte zeitliche Änderung erfahren, bevor der VCO durch Änderung seiner Frequenz eine erkennbare bzw. auswertbare Nachricht lierfert. Diese Feldstärkenänderung wird durch Änderung des Abstandes zwischen Sender und Empfänger oder durch Drehen der richtungsempfindlichen Antenne im Empfänger bewirkt. Bei sehr geringer Feldstärke am Empfangsort, was regelmäßig bei verhältnismäßig großem Abstand zwischen Sender und Empfänger auftritt, werden somit selbst schnelle Bewegungen des Empfängers keine ausreichenden Änderungen des Empfangssignales hervorrufen, um eine Änderung der Ausgangsfrequenz des VCO zu verursachen. Im "Fernbereich", der bei den heute üblichen Geräten bei ca. 25 m liegt, ist somit eine Ortung, selbst eine Grobortung des Verschütteten nicht möglich. Wenn der VCO - wie bei der DE-OS 27 03 491 - so ausgelegt ist, daß er bei einem Empfangssignal von "Null" bereits auf einer hörbaren Frequenz schwingt, so wird man im Fernbereich einen Ton konstanter Tonhöhe hören, der sich nicht ändert, solange sich der Empfänger im Fernbereich befindet. Da Lawinenfelder regelmäßig größer als der Nahbereich zwischen Sender und Empfänger sind, kann bei dem bekannten Verfahren der Nahbereich eines Senders nur durch systematisches Absuchen des Lawinenfeldes oder durch Zufall gefunden werden, wodurch wertvolle Zeit für die Rettung des Verschütteten verstreicht.

Ein weiteres Problem des bekannten Verfahrens bzw. der bekannten Schaltungsanordnung liegt darin, daß sich die europäischen Alpenländer nicht auf eine einheitliche Frequenz für Ortungsgeräte einigen konnten. So verwenden einige Länder Frequenzen von 475 kHz während andere Länder eine Frequenz von 2,275 kHz verwendet. Aus diesem Grunde sind im Handel auch bereits Geräte erhältlich, die sende- und empfangsseitig zwischen diesen beiden Frequenzen umschaltbar sind. Dies wiederum bedeutet, daß die Retter das Lawinenfeld einmal vollständig mit der einen Frequenz und anschließend vollständig mit der zweiten Frequenz absuchen müssen, wodurch wiederum wertvolle Zeit für die Rettung des Verschütteten verstreicht.

Aus der DE-OS 30 13 999 ist eine weitere Schaltungsanordnung zur Ortung Verschütteter bekannt geworden, welche die Schaltungsanordnung der DE-OS 27 03 491 dahingehend weiterbildet, daß die Verstärkung eines Empfängers in Abhängigkeit von der zeitlichen Änderung der empfangenen Feldstärke verändert wird, wobei das Empfangssignal in einem Kondensator gespeichert wird.

Aufgabe der Erfindung ist es, das Verfahren bzw. die Schaltungsanordnung der DE-OS 27 03 491 dahingehend zu verbessern, daß ein Verschütteter schneller gefunden werden kann.

Hierbei soll eine grobe Ortung des Verschütteten auch im Fernbereich möglich sein und zwar unabhängig davon, welche Sendefrequenz sein Sender benützt.

Diese Aufgabe wird erfindungsgemäß dadurch gelöst, daß die Umwandlung der Amplitude des Empfangssignales in eine Schwingung im Hörbereich nur dann durchgeführt wird, wenn die Amplitude des Empfangssignales einen vorbestimmten Wert überschritten hat (Nahbereich) und daß bei einer Amplitude des Empfangssignales unterhalb des vorbestimmten Wertes das Empfangssignal direkt verstärkt - ggf. nach einer Demodulation - hörbar gemacht wird (Fernbereich).

Bei der Schaltungsanordnung dagegen wird diese Aufgabe durch eine Triggerschaltung gelöst, die den Amplituden/ Frequenzwandler nur dann wirksam schaltet, wenn die Amplitude des Empfangssignales einen vorbestimmten Wert überschritten hat.

Im Fernbereich, der hier etwa bei Abständen von größer als 25 m liegt arbeitet der Empfänger als "Geradeausverstärker" womit eine grobe Ortung der Richtung des Senders möglich ist. In der Praxis wird man ein mehr oder weniger starkes Rauschen hören. Sobald man sich im Nahbereich befindet, wird automatisch der VCO eingeschaltet, was an einem klaren vom VCO erzeugten Ton zu hören ist. Mittels der Tonhöhenänderung erfolgt dann die Suche im Nahbereich. Im Grenzgebiet zwischen Nah- und Fernbereich wird man je nach Ausrichtung der Empfangsantenne ein ein- bzw. ausschalten des VCO erhalten, was wiederum eine wichtige Information für den Suchenden bedeutet, da er erkennen kann, daß er noch ca. 5 m vom Verschütteten entfernt ist.

Ein wichtiger Vorteil liegt weiterhin darin, daß selbst ungeübte Personen ohne spezielle Ausbildung schnell lernen, mit dem Gerät umzugehen.

Nach einer vorteilhaften Weiterbildung der Erfindung wird bei wirksamer Umwandlung der Amplitude des Empfangssignales in eine Schwingung im Hörbereich das direkte Hörbarmachen des Empfangssignales abgeschwächt bzw. unterbunden. Mit anderen Worten wird bei eingeschaltetem VCO das direkte verstärkte Eingangssignal nicht mehr hörbar gemacht. Eine Überlagerung zweier Signale, die den Benutzer verwirren könnte, kann somit nicht auftreten.

Bei einer vorteilhaften Ausgestaltung der Schaltungsanordnung geschieht dies dadurch, daß der Ausgang des Schwellwertschalters mit einem Eingang eines dem elektro-akustischen Wandler vorgeschalteten Verstärkers verbunden ist, so daß bei durchgeschaltetem Schwellwertschalter dieser Verstärker ausgeschaltet ist.

Bei einem mit zwei Frequenzen arbeitenden Gerät kann zusätzlich bei eingeschaltetem Schwellwertschalter der im Hochfrequenz-Empfangskanal liegende Verstärker in seinem Verstärkungsfaktor abgesetzt werden.

Im Nahbereich erfolgt damit eine automatische Abregelung des Verstärkers, womit sein Dynamikbereich erhöht wird, was wiederum zur Folge hat, daß er im Fernbereich mit höherer Empfindlichkeit arbeitet.

Nach einer vorteilhaften Weiterbildung der Erfindung sendet der Sender gleichzeitig auf zwei verschiedenen Frequenzen (z.B. auf 2,275 kHz und 475 kHz), wobei der Empfänger gleichzeitig für diese beiden Frequenzen empfangsbereit ist, wobei die Umwandlung der Amplitude des Empfangssignales in eine Schwingung im Hörbereich nur dann durchgeführt wird, wenn die Amplitude des Empfangssignales für eine dieser Frequenzen oder für die Summe der Amplituden beider Frequenzen den vorbestimmten Wert überschritten hat.

Ein Verschütteter kann somit auch mit Geräten geortet werden, die nur auf einer dieser beiden Frequenzen empfangen während umgekehrt ein Retter Verschüttete finden kann, die mit Geräten ausgerüstet sind, die nur auf einer dieser beiden Frequenzen arbeiten als auch mit Geräten, die auf beiden Frequenzen arbeiten.

Zur Energieeinsparung im Sender und zur klareren Heraushebung empfangener Signale werden nach einer vorteilhaften Weiterbildung der Erfindung beide Sendefrequenzen mit vergleichsweise langsamen Takt (z.B. 3,5 Hz) ein- und ausgeschaltet. Damit ein Verschütteter auch mit solchen Geräten geortet werden kann, die nicht mit einem Amplituden/ Frequenzwandler ausgestattet sind und die nur auf der außerhalb des Hörbereichs liegenden Frequenz von 475 kHz arbeiten, ist diese Sendefrequenz zusätzlich mit einer im Hörbereich liegenden Schwingung von beispielsweise 800 Hz moduliert.

Zur Funktionskontrolle des Senders ist nach einer weiteren Ausgestaltung der Erfindung vorgesehen, daß bei Sendebetrieb die ausgesandten Signale im Sender hörbar gemacht werden. Vorzugsweise erfolgt dies dadurch, daß der elektroakustische Wandler über die Restdämpfung der (bei Sendebetrieb abgeschalteten) Empfangskanäle und durch elektromagnetische Kopplung zwischen der Senderantenne und den Zuleitungsdrähten des elektro-akustischen Wandlers die ausgesandten Signale akustisch anzeigt. Der Energieverbrauch hierfür äußerst gering.

Nach einer weiteren vorteilhaften Ausgestaltung der Erfindung werden bei der Schaltungsanordnung die empfangenen Eingangssignale einem Kondensator zugeführt, an welchem ein Schwellwertschalter angeschlossen ist, dessen Ausgang mit einem Aktivierungseingang des Amplituden/Frequenzwandlers verbunden ist. Der Kondensator speichert in gewissem Umfange die Eingangssignale und führt damit eine gewisse Glättung durch, so daß einzelne Spitzen des Empfangssignales, die beispielsweise auch durch Störungen verursacht werden können, nicht zur Folge haben, daß der Amplituden/Frequenzwandler eingeschaltet wird. Erst wenn die Eingangssignale im Mittelwert den vorgegebenen Schwellwert erreicht haben, wird der VCO eingeschaltet.

Schließlich ist nach einer vorteilhaften Weiterbildung der Erfindung vorgesehen, daß beide Sendeoszillatoren jeweils eine Spule aufweisen, die gemeinsam auf einem einzigen Ferritstab im Abstand zueinander angeordnet sind, wobei die Wicklungskapazitäten durch zwischen den einzelnen Wicklungsschichten angeordnete Isolierfolien stark reduziert sind. Hiermit ist es möglich die beiden extrem weit auseinanderliegenden Sendefrequenzen von 2,275 kHz und 475 kHz mit einem einzigen Ferritstab auszusenden und zu empfangen, wofür ansonsten zwei Ferritstäbe benötigt würden. Wichtig hierbei ist, daß die Wicklungskapazitäten so klein sind, daß keine Saugkreise zwischen den beiden Oszillatoren gebildet werden.

Im folgenden wird die Erfindung anhand eines Ausführungsbeispieles im Zusammenhang mit der Zeichnung ausführlicher erläutert. Es zeigt:

Fig. 1    ein Schaltbild einer Schaltungsanordnung nach der Erfindung;

Fig. 2    ein Schaltbild des Blocks 20 der Fig. 1;

Fig. 3    eine teilweise geschnittene Ansicht eines Teils
          der Sende-Empfangsantenne;

Fig. 4    ein Wicklungsschema der Spulen der Sende-Empfangsantenne und

Fig. 5    ein verallgemeinertes Blockschaltbild der Schaltungsanordnung der Fig. 1 und 2.

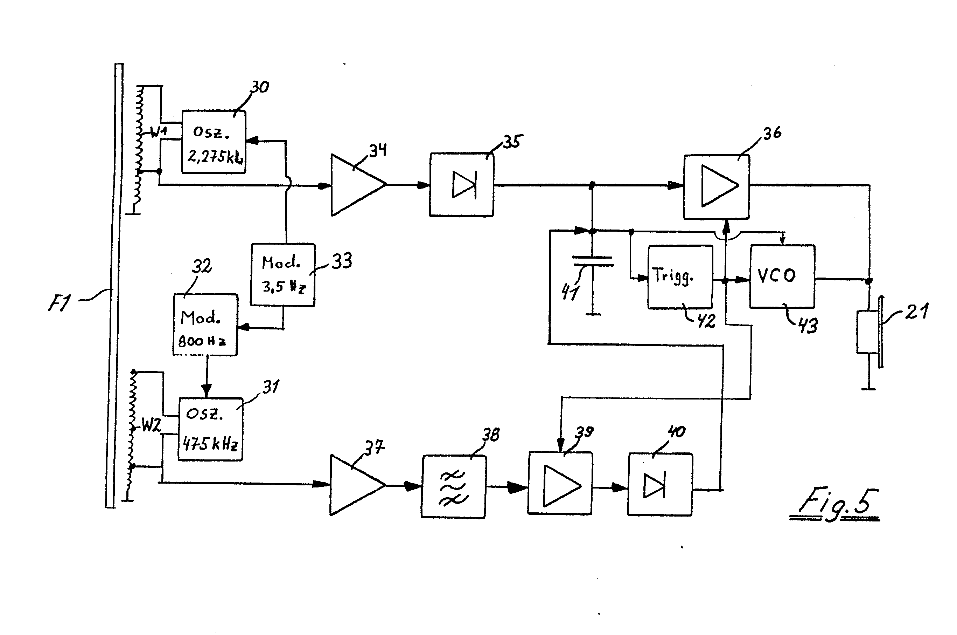

Zuerst sei auf Fig. 5 Bezug genommen. Die Schaltungsanordnung besitzt einen Ferritstab F1, auf den zwei separate
und im Abstand zueinander befindliche Wicklungen W1 und
W2 aufgebracht sind. An die Wicklung W1 ist ein Sendeoszillator 30 angeschlossen, der beispielsweise auf
2,275 kHz schwingt. An die Wicklung W2 ist ein weiterer
Sendeoszillator 31 angeschlossen der beispielsweise auf
475 kHz schwingt. Der Sendeoszillator 31, dessen Frequenz
außerhalb des Hörbereiches des menschlichen Ohres liegt,
wird von einem Modulationsgenerator 32 mit beispielsweise 800 Hz moduliert. Ein Taktgenerator 33 erzeugt ein
Taktsignal mit relativ niedrigerer Frequenz, beispielsweise 3,5 Hz, welches die beiden Sendeoszillatoren 30 und 31
bzw. den Sendeoszillator 30 und den Modulationsoszillator
32 taktweise ein- und aus-schaltet. Beide Sendeoszillatoren
30 und 31 arbeiten stets gleichzeitig, so daß der Ferritstab F1 stets Signale beider Frequenzen aussendet.

Die an dem Ferritstab F1 ankommenden Signale werden in beiden Spulen W1 und W2 empfangen, wobei diese Spulen allerdings bereits eine gewisse Vorfilterung durchführen. An entsprechenden Anzapfungen werden die empfangenen Signale von
den Spulen W1 bzw. W2 abgegriffen und jeweils einem zugeordneten Empfangskanal zugeführt. Der der Spule W1 für die
niedrigere Frequenz zugeordnete Empfangskanal enthält einen Verstärker 34, dem ein Gleichrichter 35 nachgeschaltet ist.

In ähnlicher Weise enthält der der Spule W2 für die höhere Frequenz zugeordnete Empfangskanal eine Reihenschaltung aus einem Verstärker 37, einem Bandpassfilter 38, einem weiteren Verstärker 39 und einem Gleichrichter 40. Die Ausgangssignale der Gleichrichter 35 und 40, die den Empfangssignalen der beiden Kanäle entsprechen, werden gemeinsam einem linearen Niederfrequenzverstärker 36 zugeführt, an dessen Ausgang ein elektro-akustischer Wandler 21, beispielsweise ein Kopfhörer, angeschlossen ist.

Weiterhin werden die Ausgangssignale der Gleichrichter 35 und 40 gemeinsam einem Kondensator 41 zugeführt. Die Spannung des Kondensators 41 wird einer Triggerschaltung 42 zugeführt, die dann durchschaltet, wenn die Spannung an dem Kondensator 41 einen vorgegebenen Wert überschritten hat. Das Durchschalten des Triggers 42 wird einem spannungsgesteuerten Oszillator (VCO) 43 signalisiert, wobei dieser VCO 43 dann aktiviert wird, wenn die Triggerschaltung 42 durchgeschaltet hat. Einem Steuereingang des VCO 43 wird die Spannung des Kondensators 41 zugeführt, wobei die Frequenz des Ausgangssignales des VCO 43 dieser Spannung entspricht. Das Ausgangssignal des VCO 43 wird dann dem elektro-akustischen Wandler 21 zugeführt. Weiterhin ist der Ausgang der Triggerschaltung 42 mit Steuereingängen der Verstärker 36 und 39 verbunden, wobei bei durchgeschalteter Triggerschaltung 42 der Verstärker 36 ausgeschaltet und der Verstärker 39 in seinem Verstärkungsfaktor herabgesetzt wird.

Durch das Abschalten des Verstärkers 36 bei eingeschaltetem VCO 43 wird erreicht, daß nur das Ausgangssignal des VCO 43 angezeigt wird. Durch Herabsetzung des Verstärkungsfaktors des Verstärkers 39 bei durchgeschalteter Triggerschaltung 42 wird eine höhere Dynamik des Empfangskanales für die höhere Frequenz von 475 kHz erreicht, was wiederum zur Folge hat, daß bei sehr schwachen Eingangssignalen eine verhältnismäßig hohe Verstärkung und damit eine hohe Empfindlichkeit möglich ist.

Reicht die Spannung an dem Kondensator 41 nicht aus, die Triggerschaltung 42 durchzuschalten, so ist dies ein Zeichen dafür, daß man sich im Fernbereich befindet. Die am Ferritstab F1 empfangenen Signale werden somit lediglich direkt verstärkt und über den Verstärker 36 dem elektro-akustischen Wandler zugeführt.

Reicht die Spannung am Kondensator 41 dagegen aus, die Triggerschaltung durchzuschalten, so zeigt dies an, daß man sich im Nahbereich befindet. Die empfangenen Signale werden somit nicht direkt zu dem elektro-akustischen Wandler 21 durchgelassen; vielmehr hört man nur das Ausgangssignal des VCO 43.

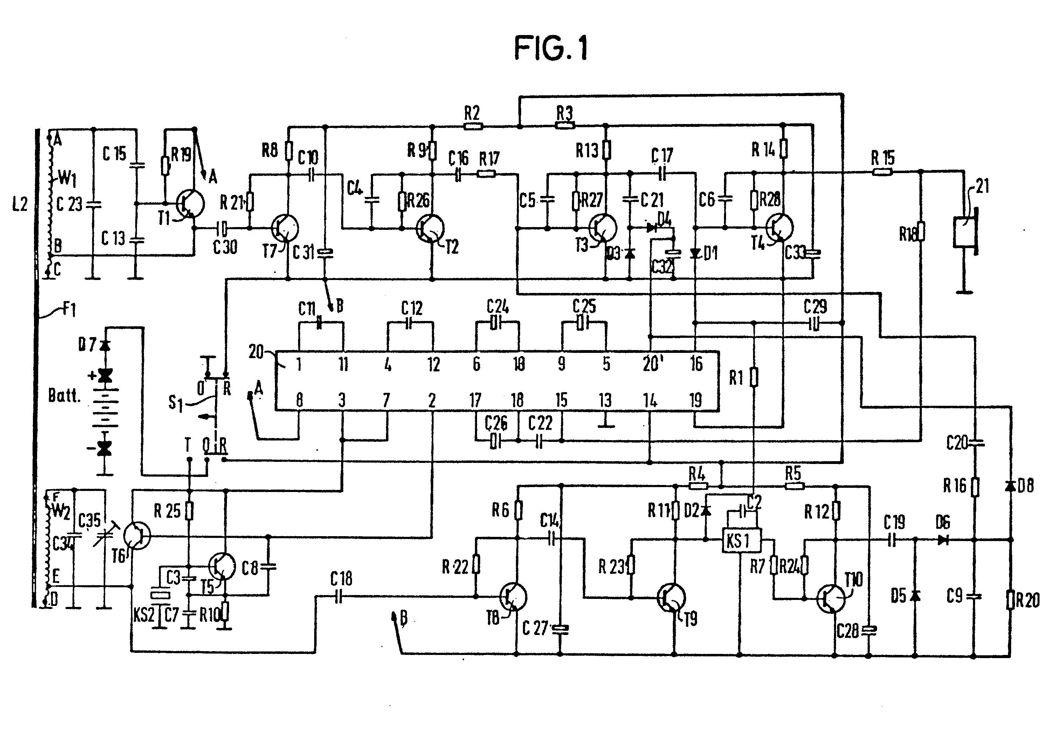

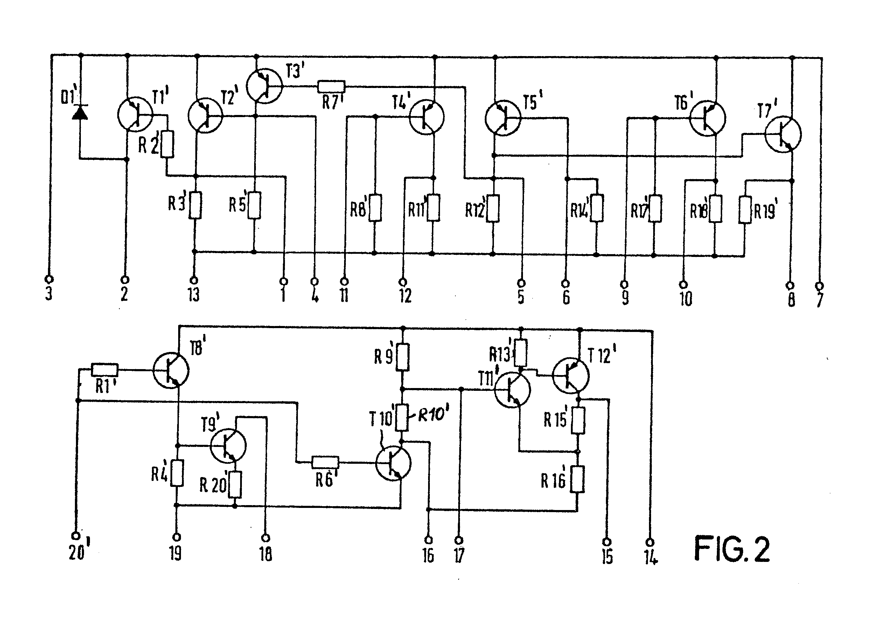

Fig. 1 zeigt ein detaillierteres Schaltbild der Schaltungsanordnung nach der Erfindung. Der Ferritstab F1 mit den beiden Wicklungen W1 und W2 ist identisch mit den entsprechenden Teilen der Fig. 5. Der Sendeoszillator 30 der Fig. 5 ist gemäß Fig. 1 wie folgt aufgebaut: Ein Endanschluß A der Spule W1 ist über einen Kondensator C 23 mit Masse verbunden. Parallel zu diesem Kondensator C 23 liegt eine Reihenschaltung aus zwei Kondensatoren C 15 und C 13, deren gemeinsamer Verbindungspunkt mit der Basis eines Transistors T1 verbunden ist. Der Emitter des Transistors T1 ist mit einer Anzapfung B der Spule W1 verbunden. Der Kollektor des Transistors T1 ist über einen Widerstand R19 mit der Basis rückgekoppelt. Die Spannungsversorgung des Transistors T1 erfolgt über eine Hybridschaltung 20 (Anschluß 8), die im Zusammenhang mit Fig. 2 ausführlicher beschrieben wird. Der andere Endanschluß der Spule W1 ist mit Masse verbunden. Der rückgekoppelte Transistor T1 bildet zusammen mit der Spule W1 und den beschriebenen Kondensatoren einen Schwingkreis, der auf die gewünschte Arbeitsfrequenz von 2,275 kHz abgestimmt ist.

Bei Empfangsbetrieb ist der Transistor T1 von der Energieversorgung abgeschaltet, so daß die Spule W1 mit den Kondensatoren C 13, C 15 und C 23 ein Filter bildet. Die in der Spule W1 induzierte Spannung wird an dem Abgriff B abgegriffen und über einen Koppelkondensator C 30 der Basis eines Transistors T7 zugeführt, welcher eine erste Stufe des Verstärkers 34 der Fig. 5 bildet. Der Emitter des Transistors T7 ist mit Masse verbunden während sein Kollektor über eine Reihenschaltung aus zwei Widerständen R8 und R2 mit positiver Betriebsspannung verbunden ist. Zusätzlich ist der Kollektor des Transistors T7 über einen Rückkopplungswiderstand R21 mit seiner Basis verbunden. Diese erste Verstärkungsstufe ist auf eine Verstärkung von ca. 30 dB eingestellt. Der gemeinsame Verbindungspunkt der Widerstände R2 und R8 ist über einen Glättungskondensator C 31 noch mit Masse verbunden. Der Ausgang, d.h. Kollektor des Transistors T7 ist über einen Koppelkondensator C 10 mit der Basis eines weiteren Transistors T2 verbunden, welcher eine zweite Verstärkungsstufe des Verstärkers 34 der Fig. 5 bildet. Der Emitter des Transistors T2 ist mit Masse verbunden, während sein Kollektor über eine Reihenschaltung aus einem Widerstand R9 und dem Widerstand R2 mit positiver Versorgungsspannung verbunden ist. Zwischen Kollektor und Basis des Transistors T2 liegt noch eine Parallelschaltung aus einem Widerstand R26 und einem Kondensator C 4. Auch die durch den Transistor T2 und die entsprechenden passiven Bauelemente gebildete Verstärkerstufe hat eine Verstärkung von ca. 30 dB. Der Ausgang, d.h. der Kollektor des Transistors T2 ist über eine Reihenschaltung aus einem Kondensator C 16 und einem Widerstand R17 mit der Basis einer dritten Verstärkungsstufe verbunden, die aus einem Transistor T3 besteht. Der Emitter dieses Transistors T3 ist mit Masse verbunden, während sein Kollektor über eine Reihenschaltung aus einem Widerstand R13 und einem Widerstand R3 mit positiver Versorgungsspannung verbunden ist. Auch hier sind Kollektor und Basis über eine Parallelschaltung aus einem Widerstand R27 und einem Kondensator C 5 miteinander verbunden. Auch diese Verstärkungsstufe hat eine Verstärkung von ca. 30 dB. Der Ausgang, d.h. der Kollektor des Transistors T3 ist über einen Kondensator C 17 mit der Basis eines weiteren Verstärkers verbunden, der dem linearen Verstärker 36 der Fig. 5 entspricht. Dieser Verstärker wird durch einen Transistor T4 gebildet, dessen Basis über den Kondensator C 17 mit dem Kollektor des Transistors T3 verbunden ist. Der Emitter des Transistors T4 ist mit Masse verbunden während sein Kollektor über eine Reihenschaltung aus einem Widerstand R14 und dem Widerstand R3 mit positiver Versorgungsspannung verbunden ist. Auch hier sind Kollektor und Basis über eine Parallelschaltung aus einem Widerstand R28 und einem Kondensator C 6 miteinander verbunden.

Der Kollektor des Transistors T4 ist über einen Widerstand R15 mit dem elektro-akustischen Wandler 21 verbunden.

Parallel zu der Kollektor-Emitterstrecke des Transistors T3 liegt eine Reihenschaltung aus einem Kondensator C 21 und einer in Sperrichtung geschalteten Diode D 3. Der gemeinsame Verbindungspunkt zwischen dem Kondensator C 21 und der Diode D 3 ist über eine in Durchlaßrichtung geschaltete Diode D 4 mit einem Kondensator C 32 verbunden, dessen anderer Anschluß auf Masse liegt. Der Kondensator C 32 entspricht dem Kondensator 41 der Fig. 5.

Die Dioden D 3 und D 4 bilden den Gleichrichter 35 der Fig. 5. Der gemeinsame Verbindungspunkt zwischen den Widerständen R3 und R14 ist noch über einen Glättungskondensator C 33 für den durch den Transistor T4 gebildeten Verstärker mit Masse verbunden.

Der gemeinsame Verbindungspunkt zwischen der Diode D 4 und dem Kondensator C 32, d.h. also ein die Spannung des Kondensators C 32 führender Punkt ist über eine Leitung mit einem Anschluß 20' der Hybridschaltung 20 verbunden. Weiterhin ist die Basis des Transistors T4 über eine in Durchlaßrichtung geschaltete Diode D 1 mit einem Anschluß 16 der Hybridschaltung 20 verbunden.

Der Sendeoszillator 31 der Fig. 5 ist wie folgt aufgebaut: Die auf den Ferritstab F1 aufgewickelte Spule W2 ist mit ihrem einen Endanschluß F mit einer Parallelschaltung aus zwei Kondensatoren C 34 und C 35 verbunden, deren andere Anschlüsse auf Masse liegen. Der Kondensator C 35 ist hierbei in seinem Kapazitätswert einstellbar. Der andere Endanschluß D der Spule W2 ist ebenfalls mit Masse verbunden. Eine Anzapfung E der Spule W2 ist mit dem Kollektor eines pnp-Transistors T6 verbunden, dessen Emitter mit einem Schaltkontakt T eines Umschalters S1 verbunden ist. Ist der Schalter S1 auf Sendebetrieb umgeschaltet, so führt der Kontakt T die positive Versorgungsspannung. Diese Versorgungsspannung wird auch dem Kollektor eines weiteren Transistors T5 zugeführt, dessen Emitter über einen Widerstand R10 mit Masse verbunden ist. Die Basis des Transistors T5 ist einerseits über einen Widerstand R25 mit dem Kontakt T des Schalters S1 verbunden und andererseits über eine Reihenschaltung aus zwei Kondensatoren C 3 und C 7 mit Masse verbunden. Parallel zu den beiden Kondensatoren C 3 und C 7 liegt noch ein Schwingquarz KS2. Der gemeinsame Verbindungspunkt der Kondensatoren C 3 und C 7 ist mit dem Emitter des Transistors T5 verbunden, der seinerseits über einen Kondensator C 8 mit der Basis des Transistors T6 gekoppelt ist. Zusätzlich ist diese Basis mit einem Anschluß 2 der Hybridschaltung 20 verbunden.

Die Anzapfung E der Spule W2 ist weiterhin über einen Koppelkondensator C 18 mit der Basis eines Transistors T8 verbunden, der eine erste Stufe des Verstärkers 37 der Fig. 5 bildet. Der Emitter dieses Transistors ist mit Masse verbunden, während sein Kollektor über eine Reihenschaltung aus Widerständen R6 und R4 mit positiver Versorgungsspannung bzw. mit einem Kontakt R des Schalters S1 verbunden ist. Auch hier ist zwischen Kollektor und Basis ein Rückkopplungswiderstand 22 vorgesehen sowie ein Glättungskondensator C 27, der zwischen dem gemeinsamen Verbindungspunkt der Widerstände R4 und R6 und Masse liegt. Der Kollektor des Transistors T8 ist über einen Kopplungswiderstand R14 mit der Basis eines Transistors T9 verbunden, der eine zweite Stufe des Verstärkers 37 der Fig. 5 bildet. Der Emitter des Transistors T9 ist mit Masse verbunden während sein Kollektor über eine Reihenschaltung aus einem Widerstand R11 und dem Widerstand R4 ebenfalls mit positiver Versorgungsspannung, d.h. mit einem Kontakt R des Schalters S1 verbunden ist. Auch hier ist zwischen Kollektor und Basis ein Rückkopplungswiderstand R23 vorgesehen. Der Kollektor des Transistors T9 ist über ein Keramikfilter KS1, das als externe Beschaltung einen Kondensator C 2 aufweist, verbunden. Das Keramikfilter KS1 bildet das Bandpassfilter 38 der Fig. 5. Ein Anschluß des Keramikfilters KS1 ist auch mit Masse verbunden. Der Ausgang des Keramikfilters KS1 ist über einen Widerstand R7 mit der Basis eines Transistors T10 verbunden, der den Verstärker 39 der Fig. 5 bildet. Der Emitter des Transistors T10 ist mit Masse verbunden während sein Kollektor über eine Reihenschaltung aus zwei Widerständen R12 und R5 mit positivier Versorgungsspannung, d.h. dem Anschluß R des Schalters S1 verbunden ist. Auch hier ist zwischen Kollektor und Basis ein Rückkopplungswiderstand R24 vorgesehen. Zwischen dem gemeinsamen Verbindungspunkt der Widerstände R12 und R5 und Masse liegt noch ein Glättungskondensator C 28.

Der Kollektor des Transistors T10 ist über einen Kopplungskondensator C 19 mit einem Diodennetzwerk verbunden, das
dem Gleichrichter 40 der Fig. 5 entspricht. Hierbei liegt
eine in Sperrichtung geschaltete Diode zwischen der Ausgangsseite des Kondensators C 19 und Masse. Der gemeinsame
Verbindungspunkt zwischen Kondensator C 19 und Diode D 5
ist über eine in Durchlaßrichtung geschaltete Diode D 6
und einer Reihenschaltung aus einem Widerstand R16 und einem
Kondensator C 20 mit der Basis des Transistors T3 verbunden. Die Kathode der Diode D 6 ist zusätzlich über
eine Parallelschaltung aus einem Kondensator C 9 und einem
Widerstand R20 mit Masse verbunden. Weiterhin ist die
Kathode der Diode D 6 über eine in Durchlaßrichtung
geschaltete Diode D 8 mit dem Anschluß 20' der Hydridschaltung 20 bzw. mit dem Kondensator C 32 verbunden.

Weiterhin ist der Kollektor des Transistors T9 über eine
in Durchlaßrichtung geschaltete Diode D 2 und einen hierzu in Reihe liegenden Widerstand R9 mit dem Anschluß 16
der Hybridschaltung 20 verbunden. Zwischen dem Anschluß
16 und einer bei Empfangsbetrieb die positive Versorgungsspannung führenden Leitung ist noch ein Glättungskondensator C 29 geschaltet.

Die Hybridschaltung 20 weist folgende externe Beschaltungen
auf: Zwischen den Anschlüssen 1 und 11 liegt ein Kondensator C 11; zwischen den Anschlüssen 4 und 12 liegt ein
Kondensator C 12; zwischen den Anschlüssen 6 und 10 liegt
ein Kondensator C 24; zwischen den Anschlüssen 9 und 5
liegt ein Kondensator C 25; zwischen den Anschlüssen 17
und 18 liegt ein Kondensator C 26; zwischen Anschlüssen
18 und 15 liegt ein Kondensator C 22. Der Anschluß 13
der Hybridschaltung ist mit Masse verbunden. Die Anschlüsse 3 und 7 der Hybridschaltung sind mit dem Kontakt T des
Schalters S1 verbunden. Der Anschluß 8 ist - wie bereits
erwähnt - mit dem Kollektor des Transistors T1 verbunden (vgl. Punkte A).

Schließlich sei noch darauf hingewiesen, daß die jeweiligen Masseleitungen der beiden Kanäle miteinander verbunden sind, wie durch den Buchstaben B bezeichnet.

Der Umschalter S1 verbindet in der dargestellten Stellung die positive Versorgungsspannung aus einer Batterie BATT mit dem Anschluß 14 der Hybridschaltung sowie mit einer Leitung, welche die Schaltkreise der Transistoren T7, T2, T3 und T4 sowie T8, T9 und T10 mit Energie versorgt. Weiterhin ist die gemeinsame Masseleitung dieser genannten Schaltkreise in der dargestellten Stellung des Schalters S1 mit Masse verbunden.

In der anderen, nicht dargestellten Stellung für den Sendebetrieb ist die genannte Masseleitung potentialfrei, während der Anschluß T nun mit der positiven Versorgungsspannung verbunden ist. In dieser Stellung sind die Transistoren T5 und T6 mit Energie versorgt sowie die Hybridschaltung 20, welche ihrerseits dann über den Anschluß 8 den Transistor T1 mit Energie versorgt, wie noch ausführlicher geschildert wird.

Im folgenden sei die Hybridschaltung 20 der Fig. 1 im Zusammenhang mit Fig. 2 detaillierter beschrieben. Die in Fig. 2 dargestellten Nummern der einzelnen Anschlüsse entsprechen denen der Fig. 1. Die Hybridschaltung 20 enthält kurz zusammengefaßt den Modulationsgenerator 32, den Taktgeber 33, die Triggerschaltung 42 und den VCO 43 der Fig. 5.

Der Modulationsoszillator 31 ist aus einem Multivibrator der Transistoren T3' und T4' aufgebaut. Die mit den Anschlüssen 3 und 7 verbundene Leitung führt bei Stellung des Schalters S1 auf "Sendebetrieb" die positive Versor-

gungsspannung. Die Emitter der beiden pnp-Transistoren T3' und T4' sind mit dieser Leitung verbunden. Der Kollektor des Transistors T3' ist über einen Widerstand R5' mit Masse verbunden, d.h. mit dem Anschluß 13 der Hybridschaltung. In gleicher Weise ist der Kollektor des Transistors T4' über einen Widerstand R11' mit Masse verbunden. Die Basis des Transistors T4' ist über einen Widerstand R8' mit Masse verbunden. Die beiden Kollektoren der Transistoren T3' und T4' sind über die Anschlüsse 4 und 12 mittels des Kondensators C 12 der Fig. 1 miteinander gekoppelt.

Der Kollektor des Transistors T3' ist mit der Basis eines Transistors T2' verbunden, der als Leistungsstufe dient. Der Emitter dieses pnp-Transistors T2' ist mit positiver Versorgungsspannung verbunden, während sein Kollektor über einen Widerstand R3' mit Masse verbunden ist. Der Kollektor des Transistors T2' ist zusätzlich über die Kontakte 1 bzw. 11 und den Kondensator C 11 der Fig. 1 mit der Basis des Transistors T4' verbunden.

Der Kollektor des Transistors T2' ist über einen Widerstand R2' mit der Basis eines Transistors T1' verbunden, dessen Emitter mit positiver Versorgungsspannung verbunden ist und dessen Kollektor mit dem Anschluß 2 verbunden ist. Zwischen Kollektor und Emitter des Transistors T1' liegt noch eine Diode D 1', die Rückschlagspitzen unterdrücken soll. An dem Anschluß 2 steht ein Signal an, welches den Sendeoszillator 31 der Fig. 5 bzw. den Transistor T6 der Fig. 1 moduliert. Der durch die Transistoren T3' und T4' gebildete Modulationsoszillator ist über die beiden Kondensatoren C 11 und C 12 in Zusammenwirken mit den entsprechenden Widerständen auf eine Schwingfrequenz von 800 Hz abgestimmt.

Dieser Modulationsgenerator wird durch den Taktgeber 33 der Fig. 1 taktweise ein- bzw. aus-geschaltet. Dieser Taktgeber besteht aus pnp-Transistoren T5' und T6', deren Emitter jeweils mit positiver Versorgungsspannung und deren Kollektor über einen Widerstand R12' bzw. einen Widerstand R18' mit Masse verbunden ist. Der Kollektor des Transistors T6' ist über die externe Beschaltung der Hybridschaltung mit dem Kondensator C 24 (Anschlüsse 10 und 6) mit der Basis des Transistors T5' verbunden. Umgekehrt ist der Kollektor des Transistors T5' über die externe Beschaltung des Kondensators C 25 (Anschlüsse 9 und 5) mit der Basis des Transistors T6' verbunden. Zusätzlich ist die Basis des Transistors T5' über einen Widerstand R24' mit Masse verbunden. In gleicher Weise ist die Basis des Transistors T6' über einen Widerstand R17' mit Masse verbunden.

Der Ausgang dieses Taktgebers ist der Kollektor des Transistors T5', welcher über einen Widerstand R7' mit der Basis des Transistors T3' des Modulationsgenerators verbunden ist. Weiterhin ist dieser Ausgang des Taktgebers mit der Basis eines als Impedanzwandler dienenden Transistors T7' verbunden, dessen Kollektor mit positiver Versorgungsspannung und dessen Emitter über einen Widerstand R19' mit Masse verbunden ist. Der Emitter des Transistors T7' ist mit dem Anschluß 8 verbunden, der ein "Modulationssignal" von 3,5 Hz für die Steuerung des Sendeoszillators, d.h. des Transistors T1 darstellt. Wenn der Impedanzwandler T7' durchschaltet, so wird positive Versorgungsspannung an den Kollektor des Transistors T1 angelegt, so daß dieser durchschalten kann, wodurch der Schwingkreis zu schwingen anfängt. Weiterhin wird über die Verbindung zwischen dem Transistor T5' und der Basis des Transistors T3' der Modulationsoszillator im Takte des Taktgebers, d.h. mit 3,5 Hz, ein- und aus-geschaltet. Das mit dem Takt von 3,5 Hz ein- und aus-geschaltete Modulationssignal von 800 Hz wird über den Anschluß 2 dann dem Sendeoszillator 31 der Fig. 5 bzw. dem entsprechende Transistor T6 der Fig. 1 zugeführt.

Der untere Teil der Fig. 2 zeigt die Triggerschaltung 42 und den spannungsgesteuerten Oszillator 43 der Fig. 5. Das über den Kondensator C 32 der Fig. 1 geglättete Empfangssignal beider Kanäle steht am Anschluß 20' der Hybridschaltung an. Über einen Widerstand R6' wird es der Basis eines Einschalttransistors T10' zugeführt. Der Emitter des Transistors T10' ist mit dem Anschluß 19 verbunden, der bei Stellung des Schalters S1 auf "Empfangsbetrieb" mit Masse verbunden ist. Der Emitter des Transistors T10' ist über eine Reihenschaltung aus zwei Widerständen R10 und R9 mit einer Leitung verbunden, die bei Stellung des Schalters S1 auf Empfangsbetrieb mit positiver Versorgungsspannung (Anschluß 14) verbunden ist. Der Transistor T10' mit seiner passiven Beschaltung bildet die Triggerschaltung 42 der Fig. 5. Der gemeinsame Verbindungspunkt zwischen den Widerständen R9' und R10' ist mit der Basis eines Transistors T11' verbunden, der zusammen mit einem Transistor T12' sowie mit dem als Stellglied dienenden Transistor T9' den spannungsgesteuerten Oszillator 43 bildet. Im einzelnen ist der Kollektor des Transistors T11' über einen Widerstand R13 mit positiver Versorgungsspannung verbunden und gleichzeitig mit der Basis des Transistors T12'. Der Transistor T11' ist ein npn-Transistor während der Transistor T12' ein pnp-Transistor ist. Der Emitter des Transistors T12' ist mit positiver Versorgungsspannung verbunden während sein Kollektor über einen Widerstand R15' mit dem Emitter des Transistors T11' verbunden ist. Weiterhin ist der Emitter des Transistors T11' über einen Widerstand R16' mit dem Kollektor des Einschalttransistors T10' verbunden, welcher seinerseits mit dem Anschluß 16 der Hybridschaltung verbunden ist. Weiterhin sind der Kollektor des Transistors T12' und die Basis des Transistors T11' über die externe Beschaltung der Kondensatoren C 22 und C 26 der Fig. 1, die hinsichtlich der genannten Verbindung in Reihe liegen, miteinander verbunden. Der gemeinsame Verbindungspunkt dieser beiden Kondensatoren ist mit dem Anschluß 18 verbunden, welcher seinerseits mit dem Kollektor des als Stellglied dienenden Transistors T9' verbunden ist. Der Emitter des Transistors T9' ist über einen Widerstand R20 mit Masse verbunden. Seine Basis ist über einen Widerstand R4' ebenfalls mit Masse verbunden und gleichzeitig mit dem Emitter eines Transistors T8', der als Impedanzwandler für den Transistor T9' dient. Der Kollektor des Transistors T8' ist mit positiver Versorgungsspannung verbunden, während seine Basis über einen Widerstand R1' mit dem Anschluß 20' verbunden ist.

Kurz zusammengefaßt arbeitet die zuletzt beschriebene Schaltung wie folgt:

Durch das Eingangssignal an dem Anschluß 20' wird, sofern dessen Amplitude die vorbestimmte Schaltschwelle des Transistors T10' erreicht, dieser Transistor durchgeschaltet, worauf der durch die Transistoren T11 und T12' gebildete Schwingkreis zu schwingen beginnt. Die Frequenz dieses Schwingkreises wird durch den wirksamen Kapazitätswert der beiden externen Kondensatoren C 22 und C 26 bestimmt. Der wirksame Kapazitätswert wird über den Transistor T9' bestimmt, der entsprechend dem Maß seiner Leitfähigkeit den gemeinsamen Verbindungspunkt der Kondensatoren C 22 und C 26, d.h. den Anschluß 18, mehr oder weniger auf Masse zieht. Zusammen mit dem Impedanzwandler 8' wird somit der wirksame Kapazitätswert des Kondensators C 26 entsprechend der Steuerspannung an dem Anschluß 20' verändert, wodurch sich die Schwingfrequenz des spannungsgesteuerten Oszillators entsprechend dieser Spannung ändert. Der Frequenzhub des spannungsgesteuerten Oszillators liegt hierbei zwischen 100 Hz bei gerade eingeschaltetem Transistor T10' und ca. 3 kHz bei der maximal auftretenden Eingangsspannung am Anschluß 20'. Dies entspricht etwa einer Eingangsspannung von 2,5 V am Anschluß 20'. Der Transistor T10' ist so eingestellt, daß er bei einem Schwellwert von ca. 1 V durchschaltet.

Wie oben erwähnt, sollen bei eingeschalteten VCO der Verstärker 36 der Fig. 5 abgeschaltet und der Verstärker 39 der Fig. 5 gedämpft werden. Dies erfolgt über den Anschluß 16 der Hybridschaltung, der mit dem Kollektor des Transistores T10' verbunden ist. Bei durchgeschalteten Transistor T10' liegt sein Kollektor auf niedrigem Potential, d.h. dem Restspannungsabfall der Kollektor-Emitter-Strecke. Unter Vernachlässigung dieses Restspannungsabfalles kann man somit sagen, daß bei durchgeschaltetem Transistor T10' sein Kollektor und damit der Anschluß 16 der Hybridschaltung auf Massepotential, d.h. auf den Potential des Anschlusses 19, liegen. Aus Fig. 1 ist nun zu erkennen, daß in diesem Falle das über den Kondensator C 17 ausgekoppelte Signal des Transistors T3 über die Diode D 1 auf Masse gezogen wird, so daß die Basis des Transistors T4 ebenfalls auf Masse liegt. Der Transistor T4, der den Verstärker 36 der Fig. 5 bildet, ist damit ausgeschaltet. In gleicher Weise führt das an dem Gleichrichter D 8 erscheinende Ausgangssignal des anderen Kanales, das dem Kondensator C 32 und dem Anschluß 20' zugeführt wird, zu einem Durchschalten des Transistors T10' und damit zum Abschalten des Transistors T4.

Liegt der Anschluß 16 der Hybridschaltung auf Masse, so wird über die Reihenschaltung aus dem Widerstand R1 und der Diode D 2 auch die Kollektorspannung des Transistors T9 reduziert und zwar über den aus den Widerständen R1 und R11 gebildeten Spannungsteiler. Der Transistor T9 erhält in diesem Falle nicht mehr seine normale Versorgungsspannung über den Widerstand R11 sondern nur noch eine heruntergeteilte Spannung, wodurch sein Verstärkungsfaktor verringert wird. Bei schwachem Empfangssignal, d.h. im Fernbereich, ist die Verstärkung des entsprechenden Kanales somit relativ groß während bei starkem Empfangssignal, d.h. im Nahbereich die Verstärkung entsprechend kleiner ist, wodurch der Dynamikbereich im Fernbereich vergrößert werden kann.

Zusammenfassend bietet die Erfindung gegenüber den bekannten Verfahren bzw. Schaltungsanordnungen den wesentlichen Vorteil, daß ein Verschütteter relativ schnell geortet werden kann. Auch im Fernbereich, bei dem bei dem bekannten Verfahren überhaupt keine Ortung möglich war, ist jetzt noch eine Grobortung möglich. Durch die automatische Umschaltung im Nahbereich wird dann von den Vorteilen der Tonhöhenänderungen voller Gebrauch gemacht. Dadurch, daß die vorliegende Erfindung sende- und empfangsseitig stets auf zwei Frequenzen arbeitet, ist sie auch universell einsetzbar und mit allen bisher bekannten System kompatibel. Obwohl bei dem bevorzugten Ausführungsbeispiel der Erfindung das 475 kHz-Signal moduliert ist, kann der Empfänger auch unmodulierte 475 kHz-Signale empfangen, welche über die Dioden D 6 und D 8 ebenfalls zu einem Einschalten des Schalttransistors T10' führen.

Durch die Verwendung eines einzigen Ferritstabes für beide Wicklungen kann ein leichtes, kleines und handliches Gerät geschaffen werden. Durch die Verwendung der Hybridschaltung 20 wird die Kompaktheit weiter gefördert, wobei die externe Beschaltung der Hybridschaltung 20 dafür sorgt, daß die Hybridschaltung selbst in Massenproduktion mit vergleichsweise unkritischer Dimensionierung erfolgen kann, während der Abgleich dann durch die externe Beschaltung erfolgt.

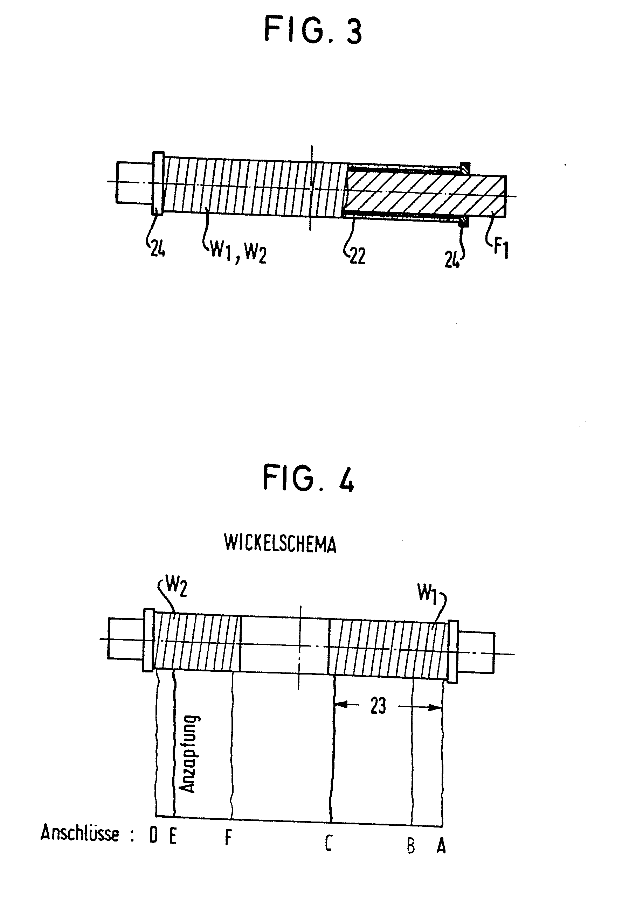

Fig. 3 zeigt eine teilweise geschnittene Ansicht der Wicklungen W1 bzw. W2, die auf dem Ferritstab F1 angebracht sind.

Ein Spulenkörper exakt definierter Länge ist auf den Ferritstab F1 geschoben. Der Spulenkörper besitzt zwei Endflansche 24. Die Wicklungen W1 bzw. W2 sind nun so aufgebracht, daß zwischen den einzelnen Wicklungslagen eine Isolierfolie 22 aufgebracht ist, wodurch die Wicklungskapazität derart verringert ist, daß zwischen den beiden Spulen keine Saugkreise gebildet werden können. Fig. 4 zeigt das Wickelschema. Die Enden der Wicklung W1 sind an den Anschlüssen A und C herausgeführt. Eine Anzapfung B ist nach einer vorgegebenen Windungszahl herausgeführt. Wichtig ist, daß die jeweilige Länge der Spulen, z.B. die Länge 23 der Spule W1 exakt eingehalten ist und daß der gegenseitige Abstand der Enden der Spulen ebenfalls exakt festgelegt ist.

Die Spule W2 ist an ihren Enden an den Anschlüssen D und F herausgeführt und es ist ebenfalls eine Anzapfung E vorhanden, welche nach einer vorgegebenen Anzahl von Wicklungen herausgeführt ist.

Sämtliche in den Ansprüchen, der Beschreibung und der Figuren dargestellten technischen Einzelzeiten können sowohl für sich als auch in beliebiger Kombination miteinander erfindungswesentlich sein.

# KERN, POPP, SAJDA, v. BÜLOW & PARTNER

Patentanwälte · European Patent Attorneys
München** · Bremen*

Kern, Popp, Sajda, v. Bülow & Partner, Postfach 86 06 24, D-8000 München 86

Ralf M. Kern · Dipl.-Ing.**
Dr. Eugen Popp · Dipl.-Ing., Dipl.-Wirtsch.-Ing.**
Wolf E. Sajda · Dipl.-Phys.**
Dr. Tam v. Bülow · Dipl.-Ing., Dipl.-Wirtsch.-Ing.**
Erich Bolte · Dipl.-Ing.*

BÜRO MÜNCHEN/MUNICH OFFICE:
Widenmayerstraße 48
Postfach/P.O. Box 86 06 24
D-8000 München 86

Telefon: (0 89) 22 26 31
Telex: 5 213 222 epo d

**0092600**

- 1 -

| Ihr Zeichen<br>Your ref | Ihr Schreiben vom<br>Your letter of | Unser Zeichen<br>Our ref. | Datum<br>Date |
|---|---|---|---|
| | | RUF 1855 | 27. Juli 1982 |

Wilhelm Ruf KG

Schwanthalerstr. 18

8000 München 2

## Verfahren und Schaltungsanordnung zur Ortung Verschütteter nach dem Sender/Empfänger-Prinzip

## Patentansprüche

1. Verfahren zur Ortung Verschütteter nach dem Sender/ Empfänger-Prinzip, bei dem die Amplitude eines Empfangssignales, die ein Maß für die räumliche Lage zwischen Sender und Empfänger darstellt, in eine Schwingung im Hörbereich umgewandelt wird, so daß deren Frequenz die räumliche Lage zwischen Sender und Empfänger angibt, dadurch gekennzeichnet, daß die Umwandlung der Amplitude des Empfangssignales in eine Schwingung im Hörbereich nur dann durchgeführt wird, wenn die Amplitude des Empfangssignales einen vorbestimmten Wert überschritten hat (Nahbereich) und daß bei einer Amplitude des Empfangssignales unterhalb des vorbestimmten Wertes das Empfangssignal direkt verstärkt - ggf. nach einer Demodulation - hörbar gemacht wird (Fernbereich).

2. Verfahren nach Anspruch 1, dadurch gekennzeichnet, daß bei wirksamer Umwandlung der Amplitude des Empfangssignales in eine Schwingung im Hörbereich das direkte Hörbarmachen des Empfangssignales abgeschwächt bzw. unterbunden ist.

3. Verfahren nach Anspruch 1 oder 2, dadurch gekennzeichnet, daß der Sender gleichzeitig auf zwei verschiedenen Frequenzen sendet und der Empfänger gleichzeitig für diese beiden Frequenzen empfangsbereit ist, wobei die Umwandlung der Amplitude des Empfangssignales in eine Schwingung im Hörbereich nur dann durchgeführt wird, wenn die Amplitude des Empfangssignales für eine dieser beiden Frequenzen oder für die Summe der Amplituden beider Frequenzen den vorbestimmten Wert überschritten hat.

4. Verfahren nach Anspruch 3, dadurch gekennzeichnet, daß beide Sendefrequenzen mit vergleichsweise langsamen Takt (z.B. 3,5 Hz) ein- und ausgeschaltet werden.

5. Verfahren nach Anspruch 3 oder 4, dadurch gekennzeichnet, daß die außerhalb des hörbaren Bereiches liegende Sendefrequenz (z.B. 475 kHz) zusätzlich mit einer im Hörbereich liegenden Schwingung (z.B. 800 Hz) moduliert ist.

6. Verfahren nach einem der Ansprüche 1 bis 5, dadurch gekennzeichnet, daß bei Sendebetrieb die ausgesandten Signale im Sender hörbar gemacht werden.

7. Schaltungsanordnung zur Ortung Verschütteter nach dem Sender/Empfänger-Prinzip mit einer richtungsselektiven Sende/Empfangs-Antenne, mindestens einem ein/aus-schaltbaren Sendeoszillator und mindestens einem ein/aus-schaltbaren Empfangskanal, der einen Amplituden/Frequenzwandler enthält, dessen Ausgangsfrequenz der Amplitude des Empfangssignales zugeordnet ist und mit einem elektro-akustischen Wandler, gekennzeichnet durch eine Triggerschaltung (42; T10'), die den Amplituden/Frequenzwandler (43; T9', T11', T12') nur dann wirksam schaltet, wenn die Amplitude des Empfangssignales einen vorbestimmten Wert überschritten hat.

8. Schaltungsanordnung nach Anspruch 7, dadurch gekennzeichnet, daß zwei parallel arbeitende Sendeoszillatoren (30, 31) und zwei parallel arbeitende Empfangskanäle (W1, 34, 35; W2, 37, 38, 39, 40) vorgesehen sind und daß die Ausgänge beider Empfangskanäle einerseits gemeinsam mit dem Eingang der Triggerschaltung (42; T10') und andererseits mit dem elektro-akustischen Wandler (21) verbunden sind.

9. Schaltungsanordnung nach Anspruch 8, gekennzeichnet durch einen Taktgeber (33; T5', T6'), der beide Sendeoszillatoren (30, 31) mit vergleichsweise niedriger Frequenz (z.B. 3,5 Hz) ein- und ausschaltet.

10. Schaltungsanordnung nach Anspruch 8 oder 9, gekenn-zeichnet durch einen zusätzlichen Modulationsoszilla-tor (32; T3', T4'), der den Sendeoszillator (31), der auf einer außerhalb des Hörbereiches liegenden Frequenz (z.B. 475 kHz) schwingt, mit einer im Hörbereich liegenden Frequenz (z.B. 800 Hz) moduliert.

11. Schaltungsanordnung nach einem der Ansprüche 7 bis 10, dadurch gekennzeichnet, daß bei Sendebetrieb der elektroakustische Wandler (21) über die Restdämpfung des bzw. der Empfangskanäle und/oder durch elektromagnetische Kopplung die ausgesandten Signale akustisch anzeigt.

12. Schaltungsanordnung nach Anspruch 7, gekennzeichnet durch einen Kondensator (C 32), dem das empfangene Eingangssignal zugeführt wird und durch einen an den Kondensator (C 32) angeschlossenen Schwellwertschalter (T10', R9', R10'), dessen Ausgang mit einem Aktivierungseingang des Amplituden/Frequenzwandlers (43; T11', T12', T9') verbunden ist.

13. Schaltungsanordnung nach Anspruch 12, dadurch gekennzeichnet, daß der Ausgang des Schwellwertschalters (T10', R9', R10') mit einem Eingang eines dem elektroakustischen Wandler (21) vorgeschalteten Verstärkers (36; T4) verbunden ist, so daß bei durchgeschaltetem Schwellwertschalter dieser Verstärker ausgeschaltet ist.

14. Schaltungsanordnung nach Anspruch 12 oder 13, dadurch gekennzeichnet, daß der Ausgang des Schwellwertschalters (T10', R9', R10') mit einem Steuereingang eines weiteren, in einem Empfangskanal liegenden Verstärkers (39; T9) derart verbunden ist, daß die Verstärkung dieses im Empfangskanal liegenden Verstärkers bei durchgeschaltetem Schwellwertschalter um einen vorgegebenen Faktor (R11/R1) herabgesetzt ist.

15. Schaltungsanordnung nach Anspruch 8, dadurch gekennzeichnet, daß beide Sendeoszillatoren (30, 31) jeweils eine Spule (W1, W2) aufweisen, die gemeinsam auf einem einzigen Ferritstab (F1) im Abstand zueinander angeordnet sind, wobei die Wicklungskapazitäten durch zwischen den einzelnen Wicklungsschichten angeordnete Isolierfolien (24) stark reduziert sind.

FIG.1

FIG.2

0092600

# FIG. 3

24  W₁,W₂  22  24  F1

# FIG. 4

WICKELSCHEMA

W₂  W₁

Anzapfung

23

Anschlüsse : D E  F  C  B A

_Fig.5_

Europaisches
Patentamt

EUROPÄISCHER RECHERCHENBERICHT

| | EINSCHLÄGIGE DOKUMENTE | | EP 82106793.1 | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| D,A<br>Y | DE - A1 - 3 013 999 (WILHELM RUF)<br>  * Fig. 1 * | 1<br><br>7 | G 01 S 3/04<br>G 01 S 11/00<br>A 63 B 29/02 |
| A<br><br>Y | CH - A - 535 054 (AUTOPHON)<br>  * Fig.; Patentanspruch; Unteransprüche 1,2 * | 1<br><br>7 | |
| A | CH - A - 519 920 (AUTOPHON)<br>  * Fig. 1,2; Patentanspruch; Unteransprüche 1-3 * | 1,7 | |
| A | US - A - 3 777 267 (VAN DER FLOE)<br>  * Fig.; Zusammenfassung * | 7 | RECHERCHIERTE SACHGEBIETE (Int. Cl. ³) |
| A | CH - A - 540 496 (AUTOPHON)<br>  * Fig. 1; Patentanspruch; Unteranspruch 1 * | 1,7 | G 01 S 1/00<br>G 01 S 3/00<br>G 01 S 11/00<br>A 63 B 29/00 |
| D,A | DE - A1 2 703 491 (MÜLLER)<br>  * Fig. 2 *<br>  ---- | 1,7 | |

Der vorliegende Recherchenbericht wurde für alle Patentansprüche erstellt.

| Recherchenort | Abschlußdatum der Recherche | Prüfer |
|---|---|---|
| WIEN | 06-07-1983 | DRÖSCHER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

\-----

& : Mitglied der gleichen Patentfamilie, übereinstimmendes Dokument

EPA Form 1503 03.82